# EUROPEAN PATENT APPLICATION

(11) **EP 4 825 925 A1**
(43) Date of publication of application: **21.10.2026**
(21) Application number: 26172705.1
(22) Date of filing: 16.04.2026
(51) Int. Cl.: C09D 7/44, C09D 5/02, C09D 5/34

(54) **FLOWABLE SELF-TOOLING SEALANT COMPOSITIONS**

(30) Priority: 16.04.2025 US 202563789602 P
(71) Applicant: DAP Global Inc., Baltimore, MD 21224 (US)
(72) Inventor: STEWART, Dianne A., Baltimore, Maryland 21224 USA, 2400 (US); BUTERA, Robert, Baltimore, Maryland 21224 USA, 2400 (US)
(74) Representative: Eisenführ Speiser

(57) **Abstract**

Described herein are self-tooling sealant compositions. The sealant compositions include a sealant binder composition, a shear thinning thixotropic thickener, and a pseudoplastic thickener. The sealant compositions are useful in a variety of building and construction applications, as well as interior or exterior trim work applications.

## Description

### CROSS-REFERENCE TO RELATED APPLICATIONS

This application claims priority to U.S. Provisional Patent Application No. 63/789602, filed April 16, 2025, the contents of which are hereby incorporated by reference herein.

### FIELD OF DISCLOSURE

This disclosure is directed to self-tooling sealant compositions. The sealant compositions include a sealant binder composition, a shear thinning thixotropic thickener, and a pseudoplastic thickener. The sealant compositions are useful in a variety of building and construction applications, as well as interior or exterior trim work applications.

### BACKGROUND

Sealant compositions, including latex sealants, may exhibit disparate degrees of shrinkage. Finding a balance in the degree of shrinkage is difficult and often involves compromised properties. On one hand, a low degree of shrinkage may be desirable to avoid sealant cracking or pulling away from edges after it fully cures. On the other hand, a high degree of shrinkage may be desirable to avoid the need for extensive tooling.

The degree of shrinkage may also negatively impact the paintability of sealant compositions. For example, paint film cracking can occur when sealants with high volume shrinkage are painted too soon or with poor quality paint. This is because cracking of paint often results from application of paint at a time when the sealant is only just skinned over (tack-free) and well before beginning to shrink from drying beyond the surface. Many paints used in these situations dry to a non-flexible film while the sealant itself is still drying underneath and slowly shrinking towards its final volume loss from evaporation of volatile components.

Solutions to achieve a high degree of shrinkage may also negatively impact the applicability of sealant compositions. For example, sealant compositions that include substantial amounts of low viscosity solvents may run or drip upon application.

There is therefore a need in the art for sealant compositions that are self-tooling without excessive shrinking or running and that are also paintable.

The present disclosure provides self-tooling sealant compositions that overcome these challenges.

### BRIEF DESCRIPTION OF THE DISCLOSURE

In one aspect, provided herein is a sealant composition comprising: a sealant binder composition, a shear thinning thixotropic thickener, and a pseudoplastic thickener.

In another aspect, provided herein is a method of making a sealant composition comprising: a sealant binder composition, a shear thinning thixotropic thickener, and a pseudoplastic thickener. The method comprises forming a mixture comprising the sealant binder composition, the shear thinning thixotropic thickener, and the pseudoplastic thickener, and mixing the mixture.

In yet another aspect, provided herein is a method of using a sealant composition comprising: a sealant binder composition, a shear thinning thixotropic thickener, and a pseudoplastic thickener. The method comprises applying the sealant composition to a work surface.

### BRIEF DESCRIPTION OF THE DISCLOSURE

Figure 1 depicts a comparative sealant applied to a gap between a baseboard and wall.
Figure 2 depicts a comparative sealant applied to a gap between a baseboard and wall and subsequently painted.
Figure 3 depicts an inventive sealant in accordance with the present disclosure sealant applied to a gap between a baseboard and wall.
Figure 4 depicts an inventive sealant in accordance with the present disclosure sealant applied to a gap between a baseboard and wall and subsequently painted.
Figure 5 depicts a comparative sealant (top) and an inventive sealant in accordance with the present disclosure (bottom), in each case after being applied to a gap between a baseboard and wall and then being removed for comparison.
Figure 6A depicts rheometer data for Inventive Composition A in accordance with the present disclosure.
Figure 6B depicts rheometer data for Inventive Composition B in accordance with the present disclosure.
Figure 6C depicts rheometer data for Inventive Composition D in accordance with the present disclosure.
Figure 7 depicts yield stress data for Inventive Composition D in accordance with the present disclosure.
Figure 8 depicts yield stress data for Inventive Composition B in accordance with the present disclosure.
Figure 9 depicts yield stress data for Inventive Composition C in accordance with the present disclosure.
Figure 10 depicts yield stress data for a comparative composition.

### DETAILED DESCRIPTION OF THE DISCLOSURE

Sealant compositions in accordance with the present disclosure are self-tooling without excessive shrinking or running. They are also paintable. The present compositions include a combination of a sealant binder composition, a shear thinning thixotropic thickener, and a pseudoplastic thickener that is sufficient to provide the desired properties.

In some embodiments, the sealant binder composition comprises a sealant polymer. As used herein a "sealant polymer" is a polymer that is useful as a sealant. In some embodiments, the sealant binder composition comprises one sealant polymer. In some embodiments, the sealant binder composition comprises at least two sealant polymers. In some embodiments, the sealant binder composition comprises three or more sealant polymers. In some embodiments, the sealant binder composition comprises a sealant polymer in the form of a polymer emulsion.

In some embodiments, the sealant binder composition comprises a latex sealant binder. In some embodiments, the sealant binder composition comprises a high solids acrylic latex polymer. In some embodiments, the sealant binder composition comprises a high solids acrylic latex polymer emulsion. In some embodiments, the sealant binder composition comprises a binder selected from the group consisting of acrylic emulsions, styrene-acrylic co-polymer emulsions, acrylic emulsions with high solids content, polyurethane dispersions, polyurethane dispersions with high solids content, and combinations thereof.

In some embodiments, the sealant binder composition comprises a high-solids acrylic latex. In some embodiments, the high-solids acrylic latex is an alkali swellable latex. In some embodiments, the sealant binder composition comprises an acrylic latex having a solids content of at least 50%, at least 55%, at least 65%, at least 70%, at least 73%, or at least 75%. In some embodiments, the sealant binder composition comprises an acrylic latex having a solids content of at most 50%, at most 55%, at most 65%, at most 70%, at most 73%, or at most 75%.

In some embodiments, when the sealant polymer comprises a high-solids acrylic latex, the sealant binder has self-thickening character or acid pendant groups. In these embodiments, the high-solids acrylic latex is not the only latex present.

In some embodiments, when the sealant polymer comprises a high-solids acrylic latex, the sealant binder does not have any self-thickening character or acid pendant groups. In these embodiments, the rheological effect is to increase the inherent system viscosity and potentially limit pseudoplastic (i.e., shear thinning) effects. These embodiments exhibit higher low shear viscosities (i.e. greater hold power) while still yielding useful flowable sealants.

In some embodiments, the sealant binder composition comprises a plasticizer. In some embodiments, the sealant binder composition comprises a liquid non-volatile plasticizer. In some embodiments, the sealant binder composition comprises a surfactant or emulsifier.

In some embodiments, the shear thinning thixotropic thickener is selected from the group consisting of polyurethane associative thickeners. The shear thinning thixotropic thickener may control spattering during application, but still exhibits controlled viscosity recovery, thereby allowing for self-tooling effects. The shear thinning thixotropic thickener exhibits time dependent behavior of viscosity, which provides for recovery behavior. It may provide a base viscosity but also permit some flow after application.

In some embodiments, the pseudoplastic thickener is selected from the group consisting of Hydrophobic Modified Alkali Swellable Emulsion (HASE) polymers, sodium polyacrylate thickeners, and combinations thereof. The pseudoplastic thickener shear thins a significant amount but very quickly recovers viscosity.

Without being bound to any particular theory, it is believed that the combination of a shear thinning thixotropic thickener and a pseudoplastic thickener strikes a balance to allow for ease of pumping during application and the ability for the sealant composition to stay put on vertical and overhead applications. One reason to mix both types of thickeners is to sufficiently slow viscosity recovery time of the pseudoplastic modifier from conventional recovery times less than 1 second to a more controlled 8 to 15 seconds to recover rheological structure, thereby allowing controlled flow into a joint for better sealing and potential surface smoothing without running away. The recovery in this way is tunable without having an overly robust base viscosity inhibiting flow.

Generally, the sealant composition may comprise any suitable sealant composition auxiliary component known in the art. In some embodiments, the sealant composition further comprises an auxiliary component selected from the group consisting of rheological additives, organic thickening agents, inorganic thickening agents, adhesion promoters, pigments, dispersants, pigment dispersants, filler dispersants, fillers, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, solvents, water, and combinations thereof.

In some embodiments, the sealant composition comprises a pH modifier for a purpose selected from the group consisting of improving stability, activating alkali swellable components in the sealant composition, and combinations thereof.

In some embodiments, the sealant composition comprises a coalescence solvent. In some embodiments, the sealant composition comprises a coalescence solvent selected from the group consisting of butyl carbitol, and combinations thereof. In these embodiments, the coalescence solvent facilitates coalescence of polymeric film during cure of high glass transition temperature polymer latexes. The coalescence solvent also ensures coalescence of polymeric film when the sealant composition is applied at lower temperatures, thereby ensuring optimal water resistance. The coalescence solvent also helps stop any syneresis (phase separation) of the formulation regardless of manufacturing methodology.

In some embodiments, the sealant composition comprises a solvent. In some embodiments, the sealant composition comprises a solvent selected from the group consisting of diethylene glycol ethyl ether, diethylene glycol monobutyl ether (butyl carbitol), ethylene glycol butyl ether (butyl cellosolve), di-propylene glycol methyl ether, propylene glycol methyl ether, propylene glycol propyl ether, di-propylene glycol n-butyl ether, acetates thereof, ethylene glycol, propylene glycol, 2,2,4-trimethyl-1,3pentanediolmonoisobutyrate, and combinations thereof.

In some embodiments, the sealant composition is water-based. In some embodiments, the sealant composition comprises water.

In some embodiments, the sealant composition is oil-based. In some embodiments, the sealant composition comprises oil.

In some embodiments, the sealant composition comprises a solids content of at least 60% by weight.

In some embodiments, the sealant composition comprises a solids content of at least 60%, at least 61%, at least 62%, at least 63%, at least 64%, at least 65%, at least 66%, at least 67%, at least 68%, at least 69%, at least 70%, at least 71%, at least 72%, at least 73%, at least 74%, at least 75% by weight, at least 76% by weight, or at least 77% by weight.

In some embodiments, the sealant composition comprises a solids content of at most 61%, at most 62%, at most 63%, at most 64%, at most 65%, at most 66%, at most 67%, at most 68%, at most 69%, at most 70%, at most 71%, at most 72%, at most 73%, at most 74%, at most 75%, at most 76% by weight, at most 77% by weight, or at most 78% by weight.

In some embodiments, the sealant composition exhibits a volume shrinkage in an amount in a range of from about 20% to about 35% upon drying. In some embodiments, the sealant composition exhibits a volume shrinkage in an amount in a range of from about 25% to about 35% upon drying.

In some embodiments, the sealant composition exhibits a volume shrinkage of at least 15%, at least 16%, at least 17%, at least 18%, at least 19%, at least 20%, at least 21%, at least 22%, at least 23%, at least 24%, at least 25%, at least 26%, at least 27%, at least 28%, at least 29%, at least 30%, at least 31%, at least 32%, at least 33%, or at least 34% upon drying.

In some embodiments, the sealant composition exhibits a volume shrinkage of at most 16%, at most 17%, at most 18%, at most 19%, at most 20%, at most 21%, at most 22%, at most 23%, at most 24%, at most 25%, at most 26%, at most 27%, at most 28%, at most 29%, at most 30%, at most 31%, at most 32%, at most 33%, at most 34%, or at most 35% upon drying.

In some embodiments, the sealant composition is self-tooling. As used herein, the term "self-tooling" means that the shrinkage is such that on a 90-degree fillet bead, the sealant will achieve a concave configuration typically seen in tooled beads without manual tooling. In these embodiments, it is understood that tooling is not necessary to achieve a final surface. Natural shrinkage during cure will leave a flat or concave bead. It is further understood that tooling may still be performed without negative effects if desired.

In some embodiments, the sealant composition has a viscosity such that it is pumpable but does not run or drip when applied in vertical and overhead applications.

In some embodiments, the viscosity is measured with a parallel plate rheometer with 25mm roughened plates, running a shear rate ramp from 0 s⁻¹ to 100 s⁻¹.

In some embodiments, the sealant composition has a dynamic viscosity in a range of from about 15 Pa*s to about 30 Pa*s. In some embodiments, the sealant composition has a dynamic viscosity in a range of from about 30 Pa*s to about 40 Pa*s. In some embodiments, the sealant composition has a dynamic viscosity in a range of from about 25 Pa*s to about 38 Pa*s. As used herein a "dynamic viscosity" refers to a viscosity measured at a shear of 10 s⁻¹.

In some embodiments, the sealant composition has a static viscosity in a range of from about 180 Pa*s to about 300 Pa*s. In some embodiments, the sealant composition has a static viscosity in a range of from about 300 Pa*s to about 550 Pa*s. In some embodiments, the sealant composition has a static viscosity in a range of from about 250 Pa*s to about 450 Pa*s. As used herein a "static viscosity" refers to a viscosity measured at a shear of 0.01 s⁻¹ or below.

In some embodiments, the sealant composition is storage-stable. In these embodiments, the term "storage-stable" means that the sealant composition has an enhanced shelf-life and does not exhibit compositional degradation when stored under ambient conditions for at least 4 months. In some embodiments, the sealant composition is storage-stable for at least 8 months. In some embodiments, the sealant composition is storage-stable for at least 12 months.

In some embodiments, the sealant composition is prepared according to a method comprising (i) forming a mixture comprising the sealant binder composition, the shear thinning thixotropic thickener, and the pseudoplastic thickener, and (ii) mixing the mixture.

In some embodiments, the sealant composition is used according to a method comprising applying the sealant composition to a work surface.

Generally, the sealant composition may be applied to the work surface using any suitable tool known in the art. In some embodiments, the sealant composition is applied to the work surface with a tool selected from the group consisting of caulk guns, pumping tools, squeeze tubes, squeeze bottles, and combinations thereof.

In some embodiments, the work surface is selected from the group consisting of a surface in a building and/or construction application, a surface in an interior trim work application, a wall, a floor, a ceiling, a door, a window, a gap therebetween, and combinations thereof.

In some embodiments, the work surface comprises a material selected from the group consisting of glass, ceramic tile, porcelain tile, ceramic and porcelain tile, concrete, metals, aluminum, plastic, polyvinyl chloride (PVC), acrylonitrile butadiene styrene (ABS), wood, drywall, and combinations thereof.

Embodiments of the present disclosure include:
Embodiment 1. A sealant composition comprising:
   a sealant binder composition;
   a shear thinning thixotropic thickener; and
   a pseudoplastic thickener.
Embodiment 2. The sealant composition of the preceding clause, wherein the sealant binder composition comprises a component selected from the group consisting of latex polymers, plasticizers, acrylic emulsions, styrene-acrylic co-polymer emulsions, acrylic emulsions with high solids content, polyurethane dispersions, polyurethane dispersions with high solids content, and combinations thereof.
Embodiment 3. The sealant composition of any preceding clause, wherein the shear thinning thixotropic thickener is selected from the group consisting of polyurethane associative thickeners.
Embodiment 4. The sealant composition of any preceding clause, wherein the pseudoplastic thickener is selected from the group consisting of Hydrophobic Modified Alkali Swellable Emulsion (HASE) polymers, sodium polyacrylate thickeners, and combinations thereof.
Embodiment 5. The sealant composition of any preceding clause, wherein the sealant composition further comprises an auxiliary component selected from the group consisting of rheological additives, organic thickening agents, inorganic thickening agents, adhesion promoters, pigments, dispersants, pigment dispersants, filler dispersants, fillers, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, solvents, water, and combinations thereof.
Embodiment 6. The sealant composition of any preceding clause, wherein the sealant composition comprises a solids content of at least 60%.
Embodiment 7. The sealant composition of any preceding clause, wherein the sealant composition exhibits a volume shrinkage in an amount in a range of from about 20% to about 35% upon drying.
Embodiment 8. The sealant composition of any preceding clause, wherein the sealant composition is self-tooling.
Embodiment 9. The sealant composition of any preceding clause, wherein the sealant composition has a viscosity such that it is pumpable but does not run or drip when applied in vertical and overhead applications.
Embodiment 10. A method of making a sealant composition comprising:
   a sealant binder composition;
   a shear thinning thixotropic thickener; and
   a pseudoplastic thickener,
   wherein the method comprises
   forming a mixture comprising the sealant binder composition, the shear thinning thixotropic thickener, and the pseudoplastic thickener; and
   mixing the mixture.
Embodiment 11. The method of the preceding clause, wherein the sealant composition further comprises an auxiliary component selected from the group consisting of rheological additives, organic thickening agents, inorganic thickening agents, adhesion promoters, pigments, dispersants, pigment dispersants, filler dispersants, fillers, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, solvents, water, and combinations thereof.
Embodiment 12. The method of any preceding clause, wherein the sealant composition comprises a solids content of at least 60%.
Embodiment 13. The method of any preceding clause, wherein the sealant composition exhibits a volume shrinkage in an amount in a range of from about 20% to about 35% upon drying.
Embodiment 14.A method of using a sealant composition comprising:
   a sealant binder composition;
   a shear thinning thixotropic thickener; and
   a pseudoplastic thickener,
   wherein the method comprises applying the sealant composition to a work surface.
Embodiment 15. The method of the preceding clause, wherein the work surface is selected from the group consisting of a surface in a building and/or construction application, a surface in an interior trim work application, a wall, a floor, a ceiling, a door, a window, a gap therebetween, and combinations thereof.
Embodiment 16. The method of any preceding clause, wherein the work surface comprises a material selected from the group consisting of glass, ceramic tile, porcelain tile, ceramic and porcelain tile, concrete, metals, aluminum, plastic, polyvinyl chloride (PVC), acrylonitrile butadiene styrene (ABS), wood, drywall, and combinations thereof.
Embodiment 17. The method of any preceding clause, wherein the sealant composition further comprises an auxiliary component selected from the group consisting of rheological additives, organic thickening agents, inorganic thickening agents, adhesion promoters, pigments, dispersants, pigment dispersants, filler dispersants, fillers, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, solvents, water, and combinations thereof.
Embodiment 18. The method of any preceding clause, wherein the sealant composition comprises a solids content of at least 60%.
Embodiment 19. The method of any preceding clause, wherein the sealant composition exhibits a volume shrinkage in an amount in a range of from about 20% to about 35% upon drying.
Embodiment 20. The method of any preceding clause, wherein the work surface is a vertical or overhead surface, wherein the sealant composition has a viscosity such that it is pumpable but does not run or drip when it is applied to the work surface.

### EXAMPLES

Without further elaboration, it is believed that one skilled in the art using the preceding description can utilize the present invention to its fullest extent. The following Examples are, therefore, to be construed as merely illustrative, and not limiting of the disclosure in any way whatsoever.

### Example 1. Inventive Compositions.

The following compositions are exemplary inventive compositions in accordance with the present disclosure.

**Table 1. Exemplary inventive composition A. A painter's caulk with very good application and self-tooling/flow characteristics.**

| Component Description | Amount (wt%) |
|---|---|
| Moderately high glass transition styrene acrylic co-polymer latex (Tg =+7C) with relatively high solids (65%) suitable for painter's caulk applications | 73.44 |
| Solvent for moderating dry time (e.g., ethylene glycol) | 0.7 |
| Solvent for ensuring complete coalescence of film when applied at lower temperatures, thereby ensuring optimal water resistance. Also helps stop any syneresis (phase separation) of the formulation regardless of manufacturing methodology (e.g., butyl carbitol) | 0.17 |
| Defoamer added for processing during manufacturing | 0.066 |
| Silane coupling agent added to ensure good adhesion on a wide variety of substrates | 0.066 |
| Alkylphenol Ethoxylate-free (APE-free) surfactant | 0.11 |
| Commodity dispersing agent for filler incorporation | 0.20 |
| Titanium oxide white pigment | 1.36 |
| 9 micron (nominal) grade of ground calcium carbonate used a filler to help build body | 21.666 |
| Polyurethane associative thickener with shear thinning effects | 0.06 |
| Oil solvent | 0.82 |
| Additive to provide long-term fungicide and mold protection | 0.20 |
| Aqueous solvent (e.g., water) | 0.40 |
| Strongly pseudoplastic thickener | 0.61 |
| Additive for overall system stability (e.g., aqua ammonia 21.5%) | 0.132 |

**Table 2. Exemplary inventive composition B. A painter's caulk with very good application and self-tooling/flow characteristics and optimized for freeze/thaw resistance.**

| Component Description | Amount (wt%) |
|---|---|
| Moderately high glass transition styrene acrylic co-polymer latex (Tg =+7C) with relatively high solids (65%) suitable for painter's caulk applications | 72.0 |
| Solvent for moderating dry time (e.g., ethylene glycol) | 0.85 |
| Co-solvent | 1.35 |
| Defoamer added for processing during manufacturing | 0.11 |
| Silane coupling agent added to ensure good adhesion on a wide variety of substrates | 0.060 |
| Alkylphenol Ethoxylate-free (APE-free) surfactant | 0.300 |
| Non-ionic, aqueous emulsifier and dispersing agent | 0.50 |
| Titanium oxide white pigment | 1.30 |
| 9 micron (nominal) grade of ground calcium carbonate used a filler to help build body | 20.870 |
| Polyurethane associative thickener with shear thinning effects | 0.088 |
| Oil solvent | 1.00 |
| Additive to provide long-term fungicide and mold protection | 0.10 |
| Aqueous solvent (e.g., water) | 0.36 |
| Strongly pseudoplastic thickener | 0.672 |
| Additive for overall system stability (e.g., aqua ammonia 21.5%) | 0.440 |

**Table 3. Exemplary inventive composition C. An exterior sealant/caulk with high movement capability in cold environments with good application and self-tooling characteristics.**

| Component Description | Amount (wt%) |
|---|---|
| Mixture of moderately low glass transition styrene acrylic co-polymer latex (Tg =-40C and -22C) with relatively high solids (60-65%) suitable for exterior caulk applications | 64.39 |
| Solvent for moderating dry time (e.g., ethylene glycol) | 1.0 |
| Defoamer added for processing during manufacturing | 0.08 |
| Silane coupling agent added to ensure good adhesion on a wide variety of substrates | 0.07 |
| Alkylphenol Ethoxylate-free (APE-free) surfactant | 0.13 |
| Commodity dispersing agent for filler incorporation | 0.20 |
| Titanium oxide white pigment | 1.50 |
| 9 micron (nominal) grade of ground calcium carbonate used a filler to help build body | 22.67 |
| Waterborne silicone resin emulsion | 3.50 |
| Wax dispersion | 0.83 |
| Polyurethane associative thickener with shear thinning effects | 0.03 |
| Oil solvent | 3.33 |
| Additive to provide long-term fungicide and mold protection | 0.20 |
| Aqueous solvent (e.g., water) | 1.67 |
| Strongly pseudoplastic thickener | 0.20 |
| Additive for overall system stability (e.g., aqua ammonia 21.5%) | 0.20 |

**Table 4. Exemplary inventive composition D. An exterior sealant/caulk with high movement capability in cold environments with good application and self-tooling characteristics.**

| Component Description | Amount (wt%) |
|---|---|
| Moderately high glass transition styrene acrylic co-polymer latex (Tg =7C) with relatively high solids (60-65%) suitable for painter's caulk applications | 24.66 |
| Moderately low glass transition self-thickening (pH = 4-5) acrylic emulsion (Tg =-12C) with relatively high solids (55-60%) | 30.00 |
| Solvent for moderating dry time (e.g., ethylene glycol) | 0.64 |
| Co-solvent | 0.40 |
| Defoamer added for processing during manufacturing | 0.11 |
| Silane coupling agent added to ensure good adhesion on a wide variety of substrates | 0.06 |
| Alkylphenol Ethoxylate-free (APE-free) surfactant | 0.16 |
| Commodity dispersing agent for filler incorporation | 0.40 |
| Titanium oxide white pigment | 0.87 |
| 9 micron (nominal) grade of ground calcium carbonate used a filler to help build body | 40.16 |
| Polyurethane associative thickener with shear thinning effects | 0.01 |
| Oil solvent | 0.90 |
| Additive to provide long-term fungicide and mold protection | 0.10 |
| Aqueous solvent (e.g., water) | 0.40 |
| Strongly pseudoplastic thickener | 0.31 |
| Additive for overall system stability (e.g., aqua ammonia 21.5%) | 0.44 |

### Example 2. Exemplary inventive composition properties.

The properties of inventive compositions A, B, and D of Example 1 were measured as follows.

**Table 4. Exemplary inventive composition properties.**

| Property | Inventive Composition A | Inventive Composition B | Inventive Composition D |
|---|---|---|---|
| Skin Time | 6 minutes | 7 minutes | 8 minutes |
| Tack free time | 25 minutes | 20 minutes | 19 minutes |
| Consistency | Smooth, uniform | Smooth, uniform | Smooth, uniform |
| Slump (ASTM D2202) | 0.35 | 4 | 3.5 |
| Paintability time | 25 minutes | 20 minutes | 25 minutes |
| Paint quality (oven test) | No matting, up-glossing, adhesion loss | No matting, up-glossing, adhesion loss | No matting, up-glossing, adhesion loss |
| Application rate | At least 12 inches per minute | At least 12 inches per minute | At least 12 inches per minute |
| Solids content | 72 wt% | 71 wt% | 76 wt% |
| Shrinkage | 33.4 vol% | 35.2 vol% | 33.6 vol% |
| 100% stress modulus | 145 psi | 82 psi | 149 psi |
| Tensile strength | 260 psi | 137 psi | 175 psi |
| Yield elongation | 481% | 751% | 452% |
| Total elongation | 482% | 760% | 469% |

### Example 3. Visual comparison.

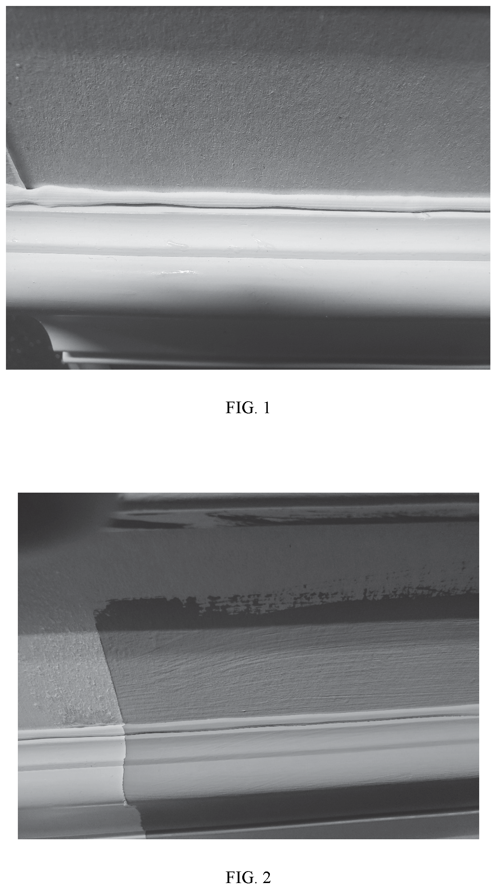

Figures 1-5 aid in visualizing the self-tooling functionality of the inventive composition.

Figure 1 depicts a comparative sealant applied to a gap between a baseboard and wall. Figure 2 depicts a comparative sealant applied to a gap between a baseboard and wall and subsequently painted. The applied comparative sealant is uneven.

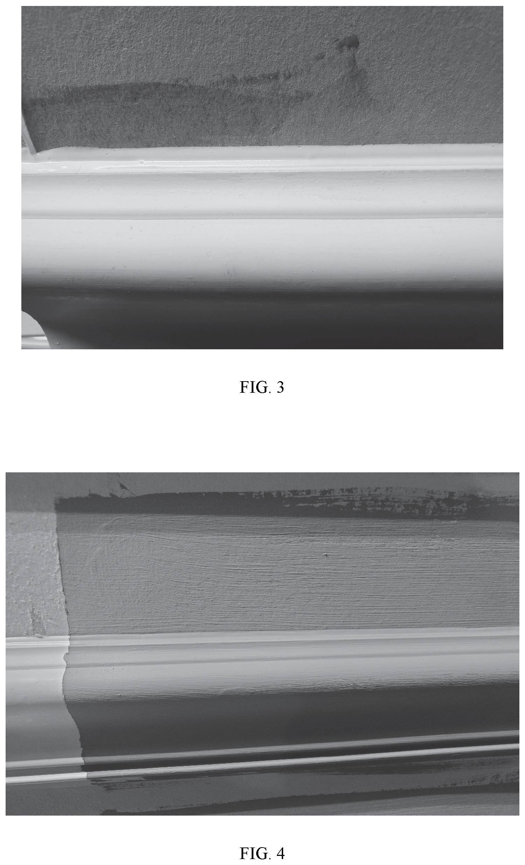

Figure 3 depicts an inventive sealant in accordance with the present disclosure sealant applied to a gap between a baseboard and wall. Figure 4 depicts an inventive sealant in accordance with the present disclosure sealant applied to a gap between a baseboard and wall and subsequently painted. The applied inventive sealant is smooth and even.

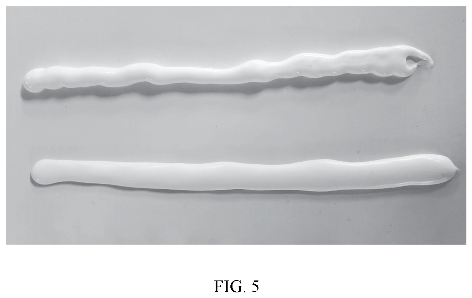

Figure 5 depicts a comparative sealant including a shear thinning thixotropic thickener but lacking a pseudoplastic thickener (top) and an inventive sealant including both a shear thinning thixotropic thickener and a pseudoplastic thickener (bottom). Both sealants were applied to a gap between a baseboard and wall in equal amounts and then were removed for comparison. As can be seen, the inventive sealant is more uniform and smoother than the comparative sealant.

### Example 4. Rheometer analysis.

Inventive sealants in accordance with the present disclosure including varying amounts of thickeners were prepared. By varying the amounts of thickeners, the viscosity of the inventive sealants was modified as desired. The viscosities were found to increase with increasing amounts of thickeners.

The viscosity is measured with a parallel plate rheometer with 25mm roughened plates, running a shear rate ramp from 0 s⁻¹ to 100 s⁻¹.

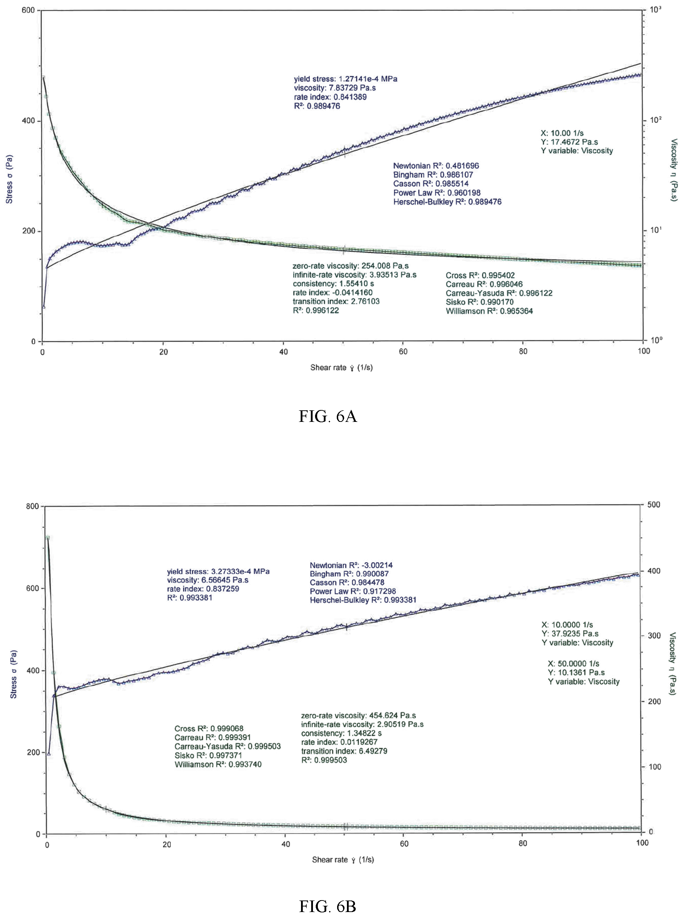

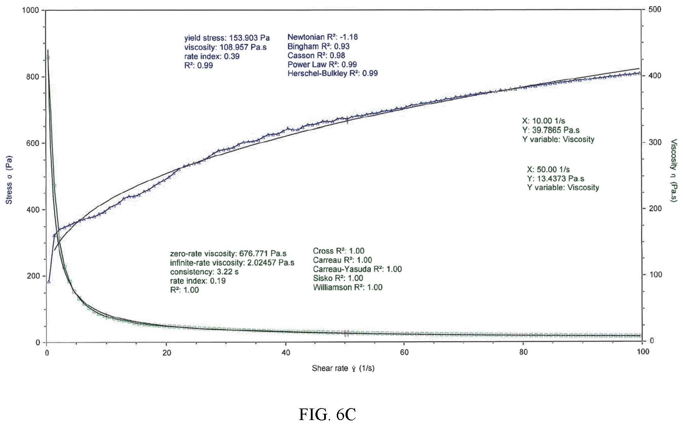

Figures 6A-6C depict rheometer data for Inventive Composition A, Inventive Composition B, and Inventive Composition D, respectively.

### Example 5. Yield stress analysis.

Yield stress was analyzed for both inventive and comparative compositions.

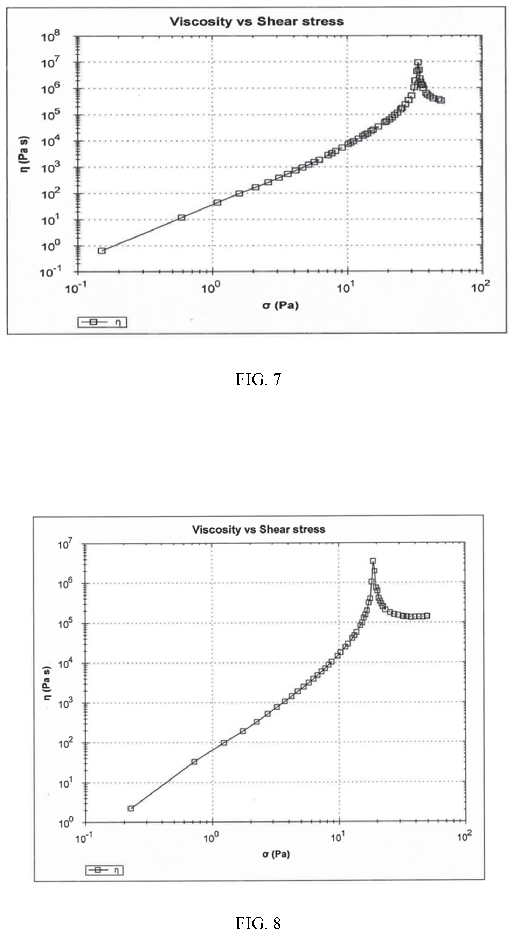

Figure 7 depicts yield stress data for Inventive Composition D. The yield stress on Inventive Composition D was tested to be 33.6 Pa having a viscosity of 9.197 x 10⁶ Pa*s. This imparts an improved sag resistance and provides easier tooling. This composition also still has self-tooling character.

Figure 8 depicts yield stress data for Inventive Composition B. These data represent what happens with increased amounts of alkali swellable rheology modifier. In this case, the yield stress is 25.3 Pa. This composition is an example of very good flow in a system ideal for kitchen and bath applications.

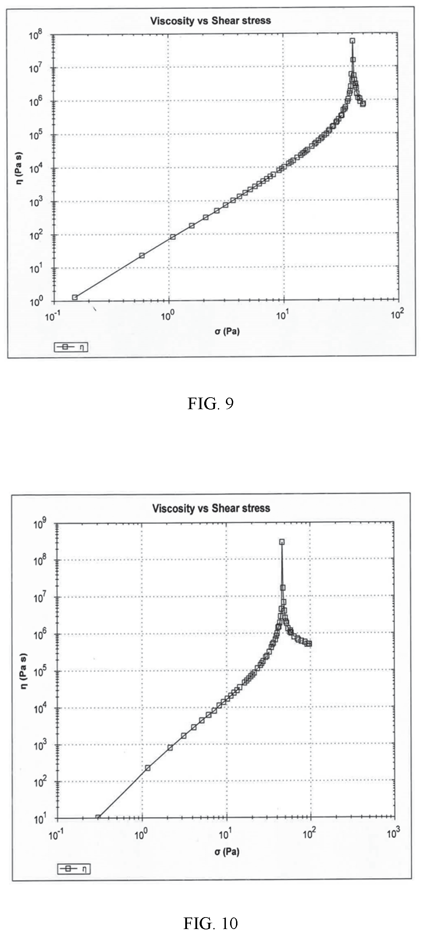

Figure 9 depicts yield stress data for Inventive Composition C. The yield stress goes over 40 Pa and the system does not flow as well for high speed application. However, there is still acceptable flow and the sealant performs properly. Generally, if the associative thickener is added at higher levels, the base viscosity becomes observably thicker and the sealant exhibits less flowability. Therefore, these data demonstrate that there is a limit to how much self-thickening acrylic latex may be added while maintaining a desired flowability of the sealant, which is also related to the alkali swellable pseudoplastic thickener content. The yield stress can be further reduced by further reducing the alkali swellable pseudoplastic thickener content. In addition, the polymer solids can be reduced to provide water resistance, higher stain resistance, and/or outstanding elongation character.

Figure 10 depicts yield stress data for a comparative composition. The stress ramp for this conventional painter's caulk has a higher yield stress value (46.22 Pa) and a viscosity (2.916 x 10⁸ Pa*s) than the inventive compositions. Combination with low shear viscosities above 30,000,000 cps makes this composition non-pourable and non-flowable, as its weight does not provide sufficient shear to induce flow from the static condition. The 10 s⁻¹ shear viscosity of this comparative composition is about 65,000 cps, while the viscosities of the exemplified inventive sealants are between 18,000 cps and 24,000 cps. The effective range for yield stress has been determined to be 23 Pa to 34 Pa.

Furthermore, it was found that the inventive compositions are stable in both freeze/thaw conditions as well as high temperature conditions. Only very minor shifts in viscosity were observed during testing, but with no appreciable change in yield stress. No physical changes or syneresis was observed.

### Conclusions.

In summary, sealant compositions have substantial benefits have been developed. The sealant composition have good viscosity control. They are flowable but able to recover rheological structure for ease of application. It was surprisingly found that the sealant compositions could include a dynamic viscosity of 3000 Pa*s or more with a reduction to around 4 Pa*s with shear, with recovery of the original viscosity in a controlled manner depending on molecular weights and the amounts of each thickener.

The sealant compositions are self-tooling without excessive shrinking or running. They are also paintable. These properties are obtainable through the combination of a sealant binder composition, a shear thinning thixotropic thickener, and a pseudoplastic thickener that is sufficient to provide the desired properties.

In particular embodiments, the observed properties are obtainable through the combination of a sealant binder composition, a shear thinning associative thickener, which may be a modified polyurethane typically suitable for spatter or brush stroke leveling control in coatings. Care needs to be taken in the selection of the thickener, as molecular weight plays an important role in post-application product flow. A pseudoplastic thickener, preferably a hydrophobically modifier alkali swellable acrylic emulsion (HASE) typically used in high build sealants, is also used, but once again care needs to be taken in the selection of the molecular weight so that the product can be applied on vertical and overhead joints without excessive flow-out and loss of seal integrity. Proper management of these two thickeners can be combined such that they are sufficient to provide the desired properties. The flow rates, yield stress and viscosity recovery times can be measured by modified stress ramp test using a parallel plate stress rheometer.

This written description uses examples to illustrate the present disclosure, including the best mode, and also to enable any person skilled in the art to practice the disclosure, including making and using any compositions or systems and performing any incorporated methods. The patentable scope of the disclosure is defined by the claims, and may include other examples that occur to those skilled in the art. Such other examples are intended to be within the scope of the claims if they have elements that do not differ from the literal language of the claims, or if they include equivalent elements with insubstantial differences from the literal language of the claims.

As used herein, the terms "comprises," "comprising," "includes," "including," "has," "having," "contains", "containing," "characterized by" or any other variation thereof, are intended to cover a non-exclusive inclusion, subject to any limitation explicitly indicated. For example, a composition, mixture, process or method that comprises a list of elements is not necessarily limited to only those elements but may include other elements not expressly listed or inherent to such composition, mixture, process or method.

The transitional phrase "consisting of" excludes any element, step, or ingredient not specified. If in the claim, such would close the claim to the inclusion of materials other than those recited except for impurities ordinarily associated therewith. When the phrase "consisting of" appears in a clause of the body of a claim, rather than immediately following the preamble, it limits only the element set forth in that clause; other elements are not excluded from the claim as a whole.

The transitional phrase "consisting essentially of" is used to define a composition or method that includes materials, steps, features, components, or elements, in addition to those literally disclosed, provided that these additional materials, steps, features, components, or elements do not materially affect the basic and novel characteristic(s) of the claimed invention. The term "consisting essentially of" occupies a middle ground between "comprising" and "consisting of".

Where an invention or a portion thereof is defined with an openended term such as "comprising," it should be readily understood that (unless otherwise stated) the description should be interpreted to also describe such an invention using the terms "consisting essentially of" or "consisting of."

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, the indefinite articles "a" and "an" preceding an element or component of the invention are intended to be nonrestrictive regarding the number of instances (i.e. occurrences) of the element or component. Therefore "a" or "an" should be read to include one or at least one, and the singular word form of the element or component also includes the plural unless the number is obviously meant to be singular.

As used herein, the term "about" means plus or minus 10% of the value.

As used herein, T_{g} temperature refers to the glass transition temperature, which is the temperature at or above which a material transitions from a relatively hard and brittle "glassy" state into a relatively viscous or rubbery state.

## Claims

1. A sealant composition comprising:
a sealant binder composition;
a shear thinning thixotropic thickener; and
a pseudoplastic thickener.

2. The sealant composition of claim 1, wherein the sealant binder composition comprises a component selected from the group consisting of latex polymers, plasticizers, acrylic emulsions, styrene-acrylic co-polymer emulsions, acrylic emulsions with high solids content, polyurethane dispersions, polyurethane dispersions with high solids content, and combinations thereof.

3. The sealant composition of claim 1, wherein the shear thinning thixotropic thickener is selected from the group consisting of polyurethane associative thickeners.

4. The sealant composition of claim 1, wherein the pseudoplastic thickener is selected from the group consisting of Hydrophobic Modified Alkali Swellable Emulsion (HASE) polymers, sodium polyacrylate thickeners, and combinations thereof.

5. The sealant composition of claim 1, wherein the sealant composition further comprises an auxiliary component selected from the group consisting of rheological additives, organic thickening agents, inorganic thickening agents, adhesion promoters, pigments, dispersants, pigment dispersants, filler dispersants, fillers, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, solvents, water, and combinations thereof.

6. The sealant composition of claim 1, wherein the sealant composition comprises a solids content of at least 60% and/or wherein the sealant composition exhibits a volume shrinkage in an amount in a range of from about 20% to about 35% upon drying.

7. The sealant composition of claim 1, wherein the sealant composition is self-tooling and/or wherein the sealant composition has a viscosity such that it is pumpable but does not run or drip when applied in vertical and overhead applications.

8. A method of making a sealant composition comprising:
a sealant binder composition;
a shear thinning thixotropic thickener; and
a pseudoplastic thickener,
wherein the method comprises
forming a mixture comprising the sealant binder composition, the shear thinning thixotropic thickener, and the pseudoplastic thickener; and
mixing the mixture.

9. The method of claim 8, wherein the sealant composition further comprises an auxiliary component selected from the group consisting of rheological additives, organic thickening agents, inorganic thickening agents, adhesion promoters, pigments, dispersants, pigment dispersants, filler dispersants, fillers, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, solvents, water, and combinations thereof.

10. The method of claim 8, wherein the sealant composition comprises a solids content of at least 60% and/or wherein the sealant composition exhibits a volume shrinkage in an amount in a range of from about 20% to about 35% upon drying.

11. A method of using a sealant composition comprising:
a sealant binder composition;
a shear thinning thixotropic thickener; and
a pseudoplastic thickener,
wherein the method comprises applying the sealant composition to a work surface.

12. The method of claim 11, wherein the work surface is selected from the group consisting of a surface in a building and/or construction application, a surface in an interior trim work application, a wall, a floor, a ceiling, a door, a window, a gap there between, and combinations thereof and/or wherein the work surface comprises a material selected from the group consisting of glass, ceramic tile, porcelain tile, ceramic and porcelain tile, concrete, metals, aluminum, plastic, polyvinyl chloride (PVC), acrylonitrile butadiene styrene (ABS), wood, drywall, and combinations thereof.

13. The method of claim 11, wherein the sealant composition further comprises an auxiliary component selected from the group consisting of rheological additives, organic thickening agents, inorganic thickening agents, adhesion promoters, pigments, dispersants, pigment dispersants, filler dispersants, fillers, detergents, non-ionic detergents, cationic detergents, anionic detergents, surfactants, non-ionic surfactants, cationic surfactants, anionic surfactants, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, solvents, water, and combinations thereof.

14. The method of claim 11, wherein the sealant composition comprises a solids content of at least 60% and/or wherein the sealant composition exhibits a volume shrinkage in an amount in a range of from about 20% to about 35% upon drying.

15. The method of claim 11, wherein the work surface is a vertical or overhead surface, wherein the sealant composition has a viscosity such that it is pumpable but does not run or drip when it is applied to the work surface.
